(19) Europäisches Patentamt
European Patent Office
Office européen des brevets

(11) **EP 2 097 715 B1**

(12) **EUROPEAN PATENT SPECIFICATION**

(45) Date of publication and mention
of the grant of the patent:
**27.11.2013 Bulletin 2013/48**

(21) Application number: **07859640.0**

(22) Date of filing: **04.12.2007**

(51) Int Cl.:
*G01B 11/25* (2006.01)     *G01B 11/24* (2006.01)
*G01C 3/08* (2006.01)     *G01S 17/89* (2006.01)
*G01S 7/481* (2006.01)     *G01S 17/95* (2006.01)

(86) International application number:
**PCT/IT2007/000843**

(87) International publication number:
**WO 2008/068791 (12.06.2008 Gazette 2008/24)**

(54) **THREE-DIMENSIONAL OPTICAL RADAR METHOD AND DEVICE WHICH USE THREE RGB BEAMS MODULATED BY LASER DIODES, IN PARTICULAR FOR METROLOGICAL AND FINE ARTS APPLICATIONS**

DREIDIMENSIONALES OPTISCHES RADARVERFAHREN UND VORRICHTUNG UNTER VERWENDUNG VON DREI MITTELS LASERDIODEN MODULIERTEN RGB-STRAHLEN, IM BESONDEREN FÜR MESS- UND KUNSTANWENDUNGEN

PROCÉDÉ DE RADAR OPTIQUE TRIDIMENSIONNEL ET DISPOSITIF QUI UTILISE TROIS FAISCEAUX RGB MODULÉS PAR DES DIODES LASERS, EN PARTICULIER POUR DES APPLICATIONS MÉTROLOGIQUES ET DE BEAUX-ARTS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.12.2006 IT RM20060651**

(43) Date of publication of application:
**09.09.2009 Bulletin 2009/37**

(73) Proprietor: **ENEA-ENTE PER LE NUOVE TECNOLOGIE E L' AMBIENTE**
**00196 Roma (IT)**

(72) Inventors:
• **FORNETTI, Giorgio**
**00196 Roma (IT)**
• **BARTOLINI, Luciano**
**00196 Roma (IT)**
• **FERRI DE COLLIBUS, Mario**
**00196 Roma (IT)**

(74) Representative: **Iannone, Carlo Luigi et al**
**Barzanò & Zanardo Roma S.p.A.**
**Via Piemonte 26**
**00187 Roma (IT)**

(56) References cited:
**WO-A-03/062744     DE-A1- 4 439 298**
**GB-A- 2 144 537     US-A- 3 945 729**
**US-A- 4 653 905**

**Description**

This invention relates to a method and an optical three-dimensional radar device utilising three RGB beams modulated by laser diodes, in particular for metrology and fine arts applications.

More particularly, this invention relates to colour monostatic laser radar adapted to colour scanning objects and scenes, by utilising three independent RGB laser beams that are anyway directed to the scene and collected by a single scanning optical apparatus, thereby eliminating any error connected with the utilisation of independent optical apparatuses as well as to the positions of three independent devices. This invention also relates to a scanning method utilising the device according to the invention.

Optical devices utilising laser beams are today commercially available for use in metrology and artificial vision fields; the manufactured products are quite different, but the commercially available devices belong to some typologies that can be classified as follows:

a) Devices for optical metrology in civil applications: these devices are laser distance measuring devices or "rangefinders", such as utilised for mapping lands or buildings. They are able to accurately measure the distances of selected points on a target upon which reflector members, generally "corner cubes", are positioned in order to reflect a signal toward a receiver. The measurements are static and involve only a few strategic points on a target. They have an unacceptable resolution for many application fields, if utilised on targets not provided with reflectors.

b) Flight time devices: these devices transmit short light pulses with high peak powers (starting from tens mW) and measure the flight time before the reception of the back scattered signal. They require generally expensive electronics and are not adapted for measurement of relatively short distances, such as for instance those involved in the whole field of closed room robotics. They are conversely rather accurate for distances larger than various tens metres. The state of the art in this field is rather advanced, but the very high costs limit their use as telemetry devices mounted on-board of military vehicles, while their applications on volumetric targets are restricted due to the discrete pattern of the probed points (cloud of points).

c) Triangulation devices (theodolites): these devices carry out distance measurements on singular points of the target by measuring the distances from two local points positioned at a known distance (base of the receiver). They are accurate for not too large distances with respect to the base of the receiver and have therefore a limited range, while in measurements involving strictly spaced targets they are limited by occlusion phenomena (a point of the target is out-of-sight in respect of one of the collectors at the end of the base). As it occurs with the devices considered under point b), it is possible to obtain static three-dimensional maps of the scene, but it is not possible to realise intensity maps.

d) Frequency modulation radar. It is today a very sophisticated and extremely expensive device for generating three-dimensional maps with sub-millimetric resolution up to a distance of 10 m. It is a very useful instrument for metrology and provides only clouds of points with only distance data, so that it finds no application in all those fields wherein images with strictly adjusted intensity are required, as it almost always occurs in the fine arts field.

e) Amplitude modulation radar: even if this device is described in some scientific articles, its development is at present rather limited, mainly due to "crosstalk" between signal strength and photocurrent phase, which has up to now restricted its resolution performances and made its development hard and expensive.

f) Telecameras: they are utilised in pairs in triangulation devices and are largely employed mainly in view of their low manufacturing costs. Their application is not conceivable for internal inspection of fusion based machines or nuclear plants and generally in hostile environments (for instance where radioactivity or high temperatures are present), because they require the utilisation of lighting auxiliary equipment. These devices suffer from occlusion phenomena, just as the above mentioned triangulation devices. A cumbersome and time consuming data process is necessary for reconstruction of three-dimensional scenes ("stereomatching"), which limits their use to not on-line operations.

In Patent IT1306879, the Applicant proposed the utilisation of an amplitude modulated radar for three-dimensional vision. The so proposed optical device enables to obtain, in a large variation range, either information relating to the distance of the objects in a scene or a three-dimensional image of an object or of a scene.

The device according to the above mentioned patent, even if it solves many problems connected with the three-dimensional vision, leaves unsolved the problem of any effective utilisation of the concerned device in certain applications, due to the fact that the scanning optics and the laser components are arranged in a single apparatus and cannot be separated from one another. This means that, when a scarcely accessible site is to be investigated, this instrument cannot be utilised.

Furthermore, the accuracy of the system according to the above mentioned patent does not appear to be sufficiently high to allow its utilisation in particular applications, such as in the field of the restoration of fine arts objects.

The Applicant further proposed by Italian Patent Application No. RM2003A000588, a novel three-dimensional radar that overcomes these problems. This novel radar is, just as the above mentioned one, an amplitude and phase modulated B&W optical radar in picking-up three-dimensional very high resolution images and is presently adapted to furnish intensity and phase images together with data concerning the surface texture of real targets, with an accuracy of $10^{-4}$: therefore, it is adapted to provide the restorers with details evidencing the degradation process taking place on continuous surfaces of hand-made products and fine arts goods, monuments and mural paintings, by non-intrusive inspection carried out at many metres distance.

However, all of the above mentioned devices are B&W devices. The adoption of a colour scan system meets with many problems, because it is necessary to scan the targets by three different beams and to reconstruct the image downstream the scanning step. From a theoretical view point, it would be possible to utilise three devices according to the last mentioned patent and then to reconstruct the colour image, but the reconstruction process would be connected with errors that would nullify the accuracy obtainable with utilisation of a single device. The errors would be generated due to the different optics to be used (manufacturing tolerances), to the positions of the devices that would result into different occlusions as well as to the need to establish a common reference system by means of a further specific device.

Further to the cited prior art, document US 3,945,729 discloses a monostatic laser radar device for metrology and three-dimensional colour vision of target objects comprising an optical system with one gas mixed laser source, whose light output has a number of spectral lines which is focused onto a target through a transmitter. The back scattered mixed light is received by a separated incoherent receiver, wherein the light is separated by a prism into different colour components and spatially focussed upon suitable corresponding photo-detectors. The resulting signals are elaborated and electronically combined in order to obtain a colour image.

Moreover, document DE 4439298 discloses a bistatic colour laser radar in which the transmitter sends light composed of three wavelength to illuminate the whole target. The receiver has a different optical axis and receives the reflected light. On the receive side a multicolour CCD-chip handles the separation of wavelength. As there is no scanner provided, here the target resolution is determined by the CCD-Chip.

It is an object of this invention to provide a topologic colour radar device adapted to furnish colour three-dimensional images of an observed scene, with the same detail reproduction accuracy as the already achieved one in black and white AM-PM radars.

It is a further object of this invention is to provide a method for colour scanning three-dimensional objects.

It is still a further object of this invention to utilise the device according to the invention as a colorimeter.

It is, therefore, a specific subject-matter of this invention a monostatic laser radar device for metrology and tri-dimensional colour vision, comprising:

- a transmitter for three unimodal scanning laser beams having three different wavelengths, which, by means of an achromatic doublet and a scanning unit, focusses the beams exiting from three independent unimodal optical fibres upon the target to be scanned, located at a distance $d_B$ from a pivot point M of the scanning unit;
- an incoherent receiver which receives the radiation reflected from the target through the same scanning camera of the transmitter and  focusses the selectively received signals according to the wavelength upon three multimodal fibres that forward them to suitable photodetectors;

- an electronic apparatus that processes the electrical signals provided by the photodetectors in order to recover therefrom the information relating to the three colour reflectivity of the pixels of the targets and their distance from the pivot point M of the scanning unit:
- the launching points from the fibres and the receiving points upon the fibres being located on conjugated optical planes, the transmitter and the receiver having a common optical axis, the relationship between the interaxial distance d of the launching fibres and the interaxial distance D of the receiving fibres being expressed by $d = D\,F_D/F_R$, wherein $F_D$ represents the focal length of the transmitter and $F_R$ represents the focal length of the receiver, the signal received at each wavelength being independently processed by said electronic apparatus and the resulting three processed signals being subsequently electronically combined by the same in order to obtain a colour image.

Preferably according to this invention, a single RGB source is used to generate a white beam, an optical band separator being used in the receiver in order to obtain the individual beams R, G, B to be sent to the three photodetectors to be individually detected.

Preferably according to this invention, the optical band separator utilises narrow band dichroic filters and/or mirrors or like.

Preferably according to this invention, a combiner for RGB beams is used to generate a single coaxial white source.

Preferably according to this invention, each signal related to a colour is demodulated upon two distinct electronic channels (strength and phase) and wherein a third electronic channel is provided for obtaining a three-dimensional image related to a colour, for each colour channel, and the merging of the data related to the three colours.

Preferably according to this invention, said three laser beams have wavelengths corresponding to the primary colours of the additive synthesis.

Preferably according to this invention, said transmitter and said receiver are materially separated from the associated laser sources and from said electronic apparatus.

Preferably according to this invention, in said scanning unit the transmitted beams are reflected near the pivot point M of a rotating mirror that also acts as a reflector of the beam back scattered towards the receiver, said rotating mirror being rotated for at least a portion of a straight angle.

Preferably according to this invention, one of the three transmitted beams is reflected onto the pivot point M and the other two beams are symmetrically reflected near to the pivot point M.

Preferably according to this invention, the whole rotating mirror is rotated for at least a portion of a round angle about the axis coinciding with the transmission direction of the three beams to the rotating mirror.

Preferably according to this invention, the terminal portions of the three launching optical fibres and the initial portions of the three receiving optical fibres are arranged within static housings designed as launching ferrule and receiving ferrule, respectively, whose planes facing to the receiver and to the transmitter are optically conjugated planes.

Preferably according to this invention, the launching ferrule comprises a substrate having three grooves wherein the three coherent input fibres are at least partially fastened, said fibres being parallel arranged on a common plane and spaced apart by an interaxial distance d.

Preferably according to this invention, the three independent unimodal optical fibres merge together into the launching ferrule, whose surface facing to the transmitter optics is located upon the object plane of said achromatic doublet.

Preferably according to this invention, the receiving ferrule comprises a substrate having three grooves wherein the three coherent input fibres are at least partially fastened, said fibres being parallel arranged on a common plane and spaced apart by an interaxial distance D.

Preferably according to this invention, the surface of the receiving ferrule facing to the receiver optics is located upon a suitable image plane of the receiver.

Preferably according to this invention, the transfer of the optical signals to the transmitter and from the receiver is performed by coherent optical fibres and multimodal optical fibres, respectively.

Preferably according to this invention, the transmitter optics is positioned at a fixed distance from the surface of the launching ferrule, so as to obtain a fixed focus focussing.

Preferably according to this invention, the transmitter is auto-focussing.

Preferably according to this invention, for the auto-focussing to be obtained, the voltage signal picked-up from the distance channel controls a piezoelectric system upon which the transmitting aspherical lens is mounted.

Preferably according to this invention, the three scanning beams are amplitude modulated on at least two radio frequencies, in particular at 200 MHz and 10 MHz with a modulation index near to one, the necessary resolution to determine with low resolution but univocally the distance of the objects that are present on the scene corresponding to the minimum frequency component, while higher and higher resolution values correspond to higher and higher frequency components.

Preferably according to this invention, three interference filters are provided before the photo-detectors in order to shield the individual channels from the radiation that is spectrally outside the optical band of the channel.

Preferably according to this invention, it includes a number of on-board encoders aimed at detecting the angular position of the pointing direction of the scanning unit.

Preferably according to this invention, the three laser beams are beams generated and modulated by current driven laser diodes.

Preferably according to this invention, the laser diodes are LED diodes.

Preferably according to this invention, the laser diodes are Super-radiating LED diodes or "SLEDs".

Preferably according to this invention, each one of the three beams is focussed within an acoustic-optical modulator that is driven in a mode selected from the group consisting of: SSB (Single Side Band), DSB (Double Side Band), DSBSC (Double Side Band with Suppressed Carrier).

Preferably according to this invention, the detection of the reflected radiation is performed by means of digital down-conversion processes under aliasing of the generated current signal.

Preferably according to this invention, each scanning laser beam utilised is unimodal and is focussed in the transmitter by means of a Galileian or Keplerian type beam expander collimator which is common to the three beams.

Preferably according to this invention, the receiver is formed by a Cassegrain-type optics or refractive optics having a refraction index that is variable as a function of the distance from the optical axis.

Preferably according to this invention, the distance measurement is carried out by measuring the flight time difference between the signal beam and the local beam, said difference being obtained by dynamically measuring the phase difference between the signal and the local photo-currents by means of a phase comparator.

Preferably according to this invention, the target is scanned by means of a mirror or a prism pair and the scanning rate can be adjusted particularly between 10 and 10 000 microseconds per pixel with variable sight fields from 0° to 360° in elevation and azimuth (zoom).

With such a structure, a rotation of the scanning unit is no more necessary, but the two mirrors or prisms perpendicularly rotate with respect to one another.

Further specific subject-matter of this invention is a scanning and detection method for metrology and three-dimensional vision, characterised in that it comprises the following steps:

D. directing three trichromatic scanning laser beams to the scene to be scanned through a single scanning optical apparatus, said laser beams being directed with substantially negligible interaxial distance;

E. receiving the laser beams back-reflected from objects existing on said scene through a single scanning optical apparatus;

F. detecting the three laser beams and combining the corresponding signals in order to achieve a three-dimensional colour image:

by utilising a device according to this invention, the planes containing the fibres of the ferrules of the transmitter and of the receiver being aligned with the azimuthal scanning plane.

Preferably according to this invention, a mask is utilised on the transmitter for intercepting the first two laser beams until the third laser beam appears on the scene, the interception involving a fraction of the scanning frame amounting to $\theta/\gamma$, wherein $\gamma$ means the scanning azimuthal aperture and $\theta$ means the angular aperture between the laser beams.

Preferably according to this invention, a fixed reflecting element is utilised near the scene for auto-referencing of the device.

Preferably according to this invention, an orthonormal projection of the scene on a plane passing through said reflecting element is extracted from the signals generated by said scanning.

Further specific subject-matter of this invention is the use of the device and of the method according to this invention for colourimetry.

This invention will be now described according to its preferred embodiment by way of illustration and not by way of limitation, by particularly referring to the annexed drawings, in which:

Figure 1 shows the electro-optical diagram of a preferred embodiment of the laser radar system according to this invention;

Figure 2 shows the electro-optical diagram of the connection of the receiving ferrule to three distinct detectors, according to a preferred embodiment of the device according to this invention;

Figure 3 shows a block diagram of the electronics for detecting the optical signal and decoding the electrical signal in a single chromatic channel, by the device according to this invention;

Figure 4 shows the distance image obtained from the data furnished by the phase channel of the device according to this invention as generated by scanning a simple shoe model;

Figure 5 shows the intersection curves of various planes with the distance model of the previous Figure;

Figure 6 shows an image of the model of Figures 4 and 5, as obtained by merging the distance and intensity data;

Figure 7 shows a model of the reference system adopted in this invention for transforming the local (polar) parameters into external parameters (laboratory reference);

Figure 8 shows a diagram of an electrical-optical system for generating an embodiment of the colour (radar) device according to this invention;

Figure 9 shows the device section (transmitter) utilised for **diffraction-limited conditions** focussing (autofocus) according to a preferred embodiment of this invention;

Figure 10 shows the transmitter section with two autofocus actuators in a different embodiment of the device according to this invention;

Figure 11 show a cross-section view of the launching or receiving ferrule according to this invention;

Figure 12 shows a scanning diagram according to the method of this invention;

Figure 13 shows a geometric diagram for calculating the scanning delay of the three RGB beams according to the device and method of this invention;

Figure 14 shows the optical diagram or "layout" of a scan carried out on a plane perpendicular to the R beam, with the three RGB beams located on the scanning plane, with the device and method according to this invention.

The same reference numerals will be used in the drawings for designating the same items.

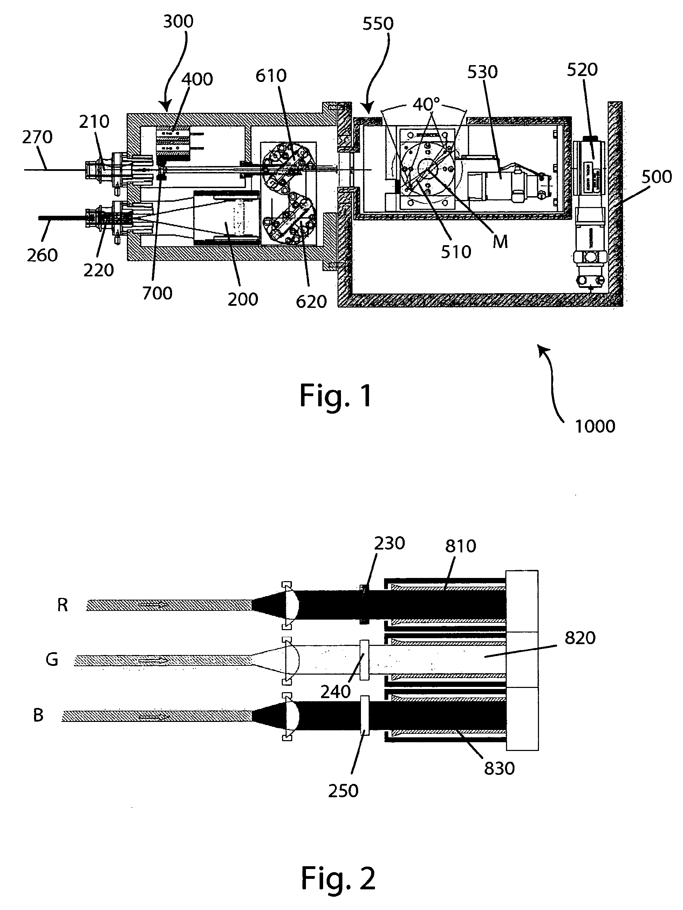

By referring now to figure 1, the device according to this invention is comprised of an electrical-optical apparatus 1000, the main sub-systems of which comprise:

1) a transmitter 210, 700, 400, 610, 550 for three laser beams (conveyed by three unimodal optical fibres 270) having three different wavelengths Red, Green and Blue), which focusses the beams upon the targets to be scanned, located at a certain distance that in the tests effected with a prototype was preferably shorter than 30 metres, thereby carrying out the scan of the target surface by means of a single scanning unit;

2) an incoherent receiver 550, 610, 620, 200, 260 which receives the radiation reflected from the target and focusses the selectively received signals upon three multimodal fibres 260 that convey the three colour signal fractions channelised on suitable dedicated photo-detectors 810, 820, 830 (shown in figure 2);

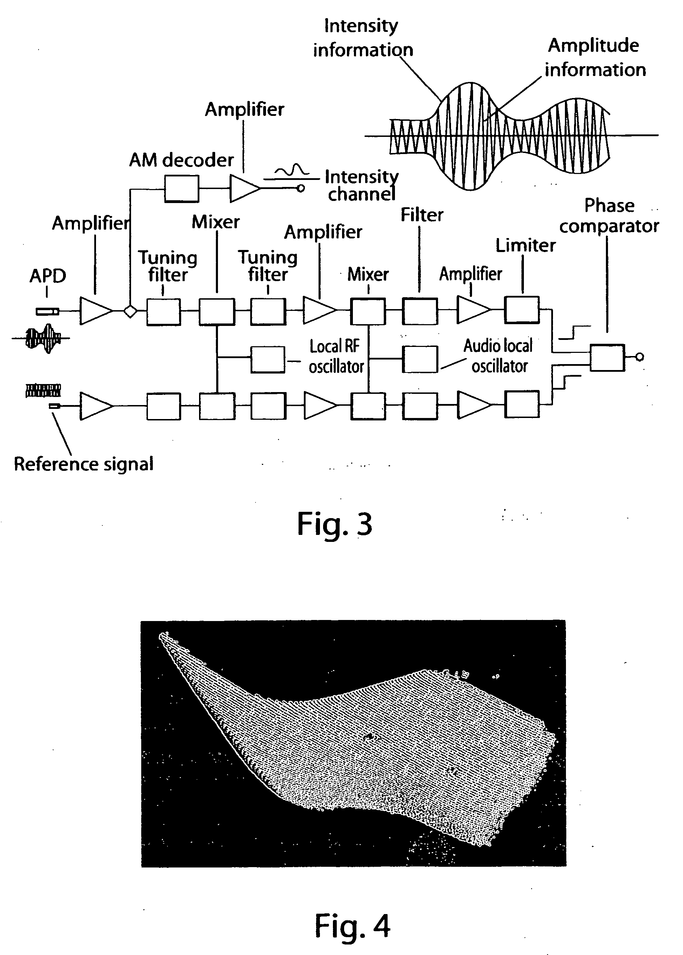

3) an electronic apparatus (shown in Figure 3) that processes the electrical signals provided by the photo-detectors and containing the information relating to the three colour reflectivity of the pixels of the scene and their distance from the pivot point M of the scanning camera.

The transmitter and the receiver have the same common optical axis (monostatic radar).

The transfer of the optical signals occurs by means of coherent optical fibres from the sources to the transmitter and by means of multi-modal fibres from the receiver to the detectors.

The terminal portions of the launching fibres 270 and the initial portions of the receiving fibres 260 are mounted within ferrules (launching ferrule 210 and receiving ferrule 220), whose planes facing to the transceiver are optically conjugated planes.

The triads of conveyer fibres together with the associated conjugated ferrules and with the associated R,G,B sources represent a substantial technical concept when a single scanning camera is intended to be used, as it will be explained in the following description.

Particular reference will be made in the following to the features of a prototype realised by the Applicant, but this should not be considered as a limitation to the possible embodiments of the device according to the invention.

For the aperture of the receiver and the power of the transmitted unimodal beams, it has been established that the colour radar prototype according to the invention was intended for measurement and acquisition of colour three-dimensional images of artistic works and structures of archaeological and cultural interest, in environments of middle-large dimensions. The starting base of the project has been conditioned by hierarchical important requirements for fulfilling the desired applications.

A starting requirement relates to defining the distance range selected for the concerned application, namely a minimum and a maximum distance.

The environment in which the application to be described is to be located is a church or a cathedral (or like), of dimensions not larger than for instance those of the Sistina Chapel. An optical arrangement adapted to carry out very accurate measurements in still larger environments and rooms is the one adopted in the SIDART 100 radar of the Applicant, that however is at present a B&W device.

Consequently, a range of 2 metres to 30 metres has been selected as a starting base.

The second criterion is related to the measurement typology, namely the accuracy and the image detail level and therefore the resolution. Since the device furnishes three-dimensional data, a sufficiently long residence time of the beam upon each element of the scene ("Pixel Sampling Time" or PST) should be allowed to reach a colour depth suitable for the required distance.

This criterion often requires long acquisition times (hours), particularly when distance measurements are carried out on scenes of noticeable dimensions (for instance many square metres with the millimetric resolutions required by solid surfaces).

The third criterion relates to the size of the targets intended to receive and transmit the signals: in fact, the volumes and the weights of the apparatus are related to their apertures. A compromise between volumes and performances for devices intended for operation at a distance of up to 30 m is reached by adopting high quality 50 mm optics, with focal length of 150 mm for reception and 10 mm optics with focal length of 40 mm for transmission.

While scanning the scene, the transmitter should focus the unimodal beam upon the current surface element, whose expected distance for utilisation of the device according to this invention varies in the above said range of 2 to 30 metres. The focussing step can be automatically carried out by means of a piezoelectric translator device (autofocus).

In this prototypic phase, it has been decided to adopt a fixed focus system in connection with the receiver, in order to simplify the mechanical section of the radar apparatus and to avoid any use of ultrasound motors that, on one hand, would enable an autofocussing operation even on the image plane of the receiver, but, on the other hand, would also entail a noticeable increase in the weight of the device.

A fixed focus receiver, therefore, is noticeably simpler and lighter, but it suffers from a collection efficiency that falls down to 30% near the end points of the distance range. This limitation is also accompanied by an interference or "crosstalk" effect between the transport channels R, G and B (chromatic crosstalk). These limitations (only occurring at the end points of the inspection distance ranges) are alleviated as it will be seen hereinbelow by utilising reception fibres having a core of 1 mm diameter.

For this reason, the present description of the realised prototype will analyse the details only of a radar provided with an autofocussing transmitter, which appears to be now the preferred approach in view of its acceptable compromise between the image quality and the above said chromatic crosstalk effect. It should be however clearly understood that the above described utilisation limitation to a range of 2 to 30 metres is only related to such focussing decision. Such limits can be very much extended by utilising two autofocus devices.

By referring again to Figure 1, the electrical-optical diagram of the colour topologic radar (ITRC50) which subject-matter of this patent application includes the following sub-assemblies:

> 1) an optical-mechanical section 500 forming the transceiver head of the radar;
> 2) an optical system (not shown) comprising three colour coherent laser sources provided with output fibres operating at the following wave lengths
> $\lambda 1 = 660$ nm (R beam)
> $\lambda 2 = 513$ nm (G beam)
> $\lambda 3 = 405$ nm (B beam);
> 3) a transmission metal ferrule 210 into which the three coherent launching fibres converge;
> 4) an achromatic doublet 700 for launching the three beams to the target;
> 5) a reception ferrule 220, from which three multimodal fibres start for conveying the three collected optical fields R, G, B and transporting them to three distinct detectors;
> 6) a piezoelectric system 400 for focussing the transmitter onto the target during the scanning operation (autofocus);
> 7) an electronic system (not shown) for modulation of the three beams generated by the three source with a high frequency (UHF) and an intermediate frequency;
> 8) an electronic system (not shown) for demodulation of the signals and their synchronisation ,
> 9) an electronic system (not shown) for starting the autofocus operation.

Figure 1 shows the optical radar head comprising the scanning unit 500: the unimodal laser beams inputted to the launching ferrule 210 and operating at the optical R, G, B channel frequencies are preferably generated by GaAs diodes externally current driven with two radio frequencies.

As illustrated in the above mentioned patent documents of the Applicant in connection with a single beam approach, the three beams according to this invention are also preferably amplitude modulated at radio frequencies of 200 MHz and 10 MHz, with modulation index value near to one, and are rigorously transmitted by means of three coherent launching fibres from the launching ferrule, then they are collimated by means of a common achromatic doublet with F# = 4 (with F# > 3, the doublet is free from aberrations) and focussed onto the target. The modulation index values can be varied according to the circumstances.

By utilising two radio frequencies, it is possible to achieve a noticeable distance measurement accuracy on very detailed scenes while contemporaneously the distortions associated to the envelope periodicity of the transmitted wave form ("folding") are eliminated, thereby making it possible to utilise the radar also for industrial metrology applications on largely dimensioned surfaces, where accuracy values better than $10^{-4}$ are usually required together with frame times of a few tens seconds.

The transmitted optical power (probe beam) passes through an apertured mirror 610 arranged at 45° and hits the pivot point of a powered planar mirror 510, arranged within a scanning unit 550, rotatably mounted about the monostatic axis of the radar. Said powered planar mirror 510 relays the probe beam to the target-.

In this preferred embodiment, the scanning unit 550 is adapted to carry out two perpendicular rotations. The scanning angle in the drawing Figure varies in the range of ±20° (but an increase thereof by changing the construction of the scanning unit would not be problematic), while the frame angle varies in the range of ±90°. In this way, as it clearly appears from the Figure, wherein also motors 520 and 530 can be observed, one of the two rotation axes of mirror **510** coincides with the laser direction.

Receiver 300 comprises the optics for collecting the optical signals R, G and B reflected from the target and intercepted by two fixed mirrors 610, 620 internally arranged in the head as well as a system for collecting the optical fields of the three channels (reception ferrule 220) on three multimodal optical fibres that convey the signal to three remote distinct detectors (not shown).

By referring to Figure 2, three interference filters 230, 240, 250 are provided before the detectors and shield the individual channel from the radiation spectrally outside of the optical band of the channel.

The transmission band of the filters coincides with the emission band of the associated source and their aim is just to make the device unresponsive to the lighting conditions of the environment (such the solar light or possible glows in industrial environment).

A lens 200 comprised of an achromatic doublet with focal length of 150 mm and aperture of 50 mm is utilised in the above described receiver.

The optical power reflected from the target within the solid angle subtended by the receiver and conveyed within the three transport channels is amplitude modulated selectively on each channel as a result of the reflectivity of the points probed at the three operation wave lengths; these video AM signals are independent, since they are connected with the colour of the scene.

The radio frequency carrier on the other hand is phase modulated in identical way on the channels in view of the common value of the distance of the instantaneous scanned point. This makes it possible to completely collect the necessary data for reconstructing a three-dimensional image with the colours of the scene and with resolution of a solid surface into three dimensions. The two RF frequencies for modulating the carrier of each channel enable the image to be rectified on the whole desired distance range, thereby enabling high resolution three-dimensional orthoimages to be generated for application for instance in the metrology field.

The feature of the simultaneous acquisition of distance and intensity data, together with the accuracy of the distance measurement carried out by demodulating the instantaneous phase of the optical signal on the two modulation radio frequencies of the carriers R, G and B is to be considered as an important innovation aspect and is one of the substantial points of the above described device: in this device, in fact, the signal of each optical channel is demodulated on two distinct electronic channels (intensity and phase), but the independence of the two information items is maintained; therefore, it is possible to establish a third electronic channel by merging the data together and to obtain an image for each channel R, G and B in three dimensions (Colour Topological Radar).

A block diagram of the electronic section aimed at detecting the optical signal and at decoding the electrical signal in a single chromatic channel is illustrated in Figure 3.

The detector shown in Figure 3 for each channel is an avalanche photo-diode followed by an electronic amplifier which provides for amplitude demodulation of the signal: the same signal is forwarded to a heterodyne down-conversion circuit, that converts the signal carrier frequency to audio band, and subsequently to a phase comparator circuit together with a local reference signal.

The signal obtained from the comparator circuit is formed by a voltage proportional to the phase shift associated to the difference of the optical paths of the signal and local beams. The signals available on the phase output v(0) and on the AM output enable the three-dimensional image and the intensity image, respectively, of the scene to be reconstructed by utilisation of suitable synchronisation pulses generated by the driver of the scanning unit.

Figure 4 shows an image (small shoe model) as obtained by means of a single channel of a colour radar having the optical and mechanical features described in the paragraph. The scene was picked-up by arranging a very simple but interesting object in the visual field, in order to evidence in sufficiently clear and didactic manner the simplest images that can be obtained by means of a single phase channel.

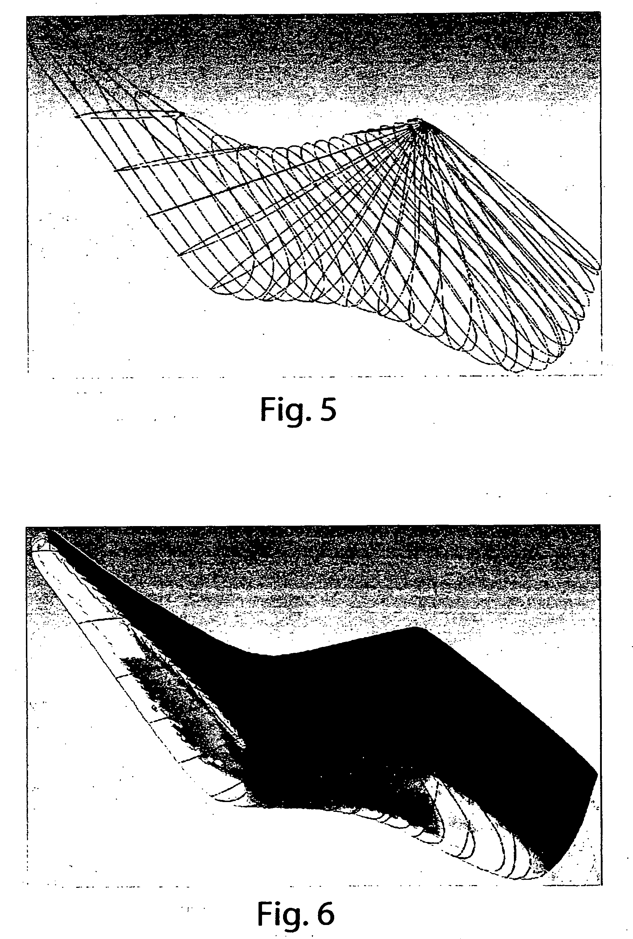

Figure 5 shows the intersection curves of various planes with the distance model of the previous Figure. These curves are continuously interpolated and can be generally utilised in all problems encountered in surface modellisation of objects. The so reconstructed image is adapted for utilisation in fast prototyping machines.

Figure 6 shows an image of the model as obtained by merging the distance and intensity data. The latter image in completed in its data density structure by adding also the reflectivity data (grey levels) to the distance data of the first two 3D images of the small shoe model. It is worthwhile to remark that the data acquired to obtain this image are also sufficient to generate replicas by fast prototyping and are useful both in industrial manufacture of objects and in replicating archaeologically interesting constructions for exhibition and investigation purposes.

In merging the distance and reflectivity data on three channels R, G, B, the colour purity depends on the presence of the chromatic crosstalk, which, however, is almost absent in the operation range of selected distances.

By optimum focus adjustment, the theoretic resolution achieved in the displayed image, as scanned at a 5 metre distance, is of about 0,5 mm on the green channel. The real resolution measured on the coloured image is anyway lower than one millimetre.

With a device according to this invention, it is possible to obtain images intended to form a new diagnostic support for the measurement and dimensional control operations on inaccessible architectonic structures of archaeological relevance.

The inspections of this type require the insertion of the radar apparatus into a laboratory station that could also be temporarily displaced between an examination course and the following one, in such a manner that, however, the concerned images be spatially identical and overlapping, even if they are picked-up in very different times, as it necessarily occurs in measurements and in checking the course of transformations (for instance the development of humidity spots).

The device according to this invention is provided with on-board encoders (for internal motors) which enable self-referencing of the device, upon installation, with respect to a polar or orthogonal Cartesian system, solidly connected to the laboratory.

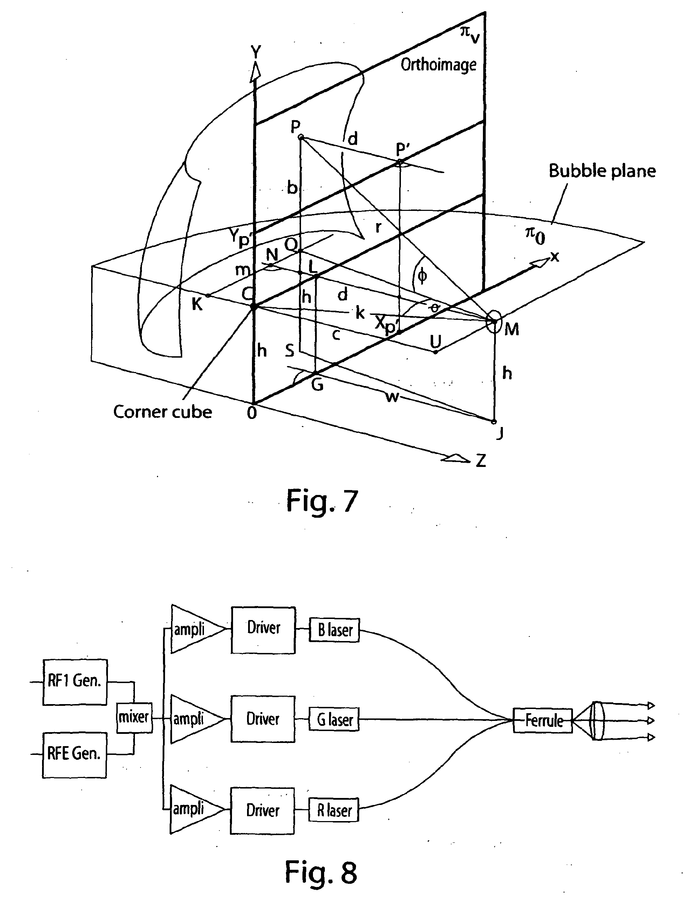

Figure 7 shows the model of a reference system as adopted for transforming local (polar) parameters into external parameters (laboratory reference).

The transformations are then utilised for polar reformatting of the image.

Figure 7 shows a picking-up diagram for a curved wall by means of a topologic radar, the scanning pivot point of which is placed at point M whose level with respect to the floor is placed at the same level h of a reflector solidly connected to a wall of the environment located in point C ("corner cube").

The plane passing through points M and C is perpendicularly aligned with the gravity force and is perpendicular to the plane passing through point C at a distance w (pre-selected by the operator) from pivot point M. The orthogonal projection of the object surface is just effected on this latter plane (ortho-image). Pivot point M is located at a free location of the floor, such that the scene can be scanned from it with the minimum number of occlusion points and whose self-referencing in the orthogonal Cartesian triad X, Y, Z solidly connected to the laboratory is furnished by the following coordinates:

$$X_M = (k^2 - w^2)^{1/2} ,$$

$$Y_M = h,$$

$$Z_M = w.$$

For each image element of the scene, the optical on-board encoders of the radar, together with their distance from the pivot point M, establish the local polar triad r, $\theta$, $\phi$.

Each point P of the wall is scanned by beam R, G, B and is located by the polar triad; this point is subsequently ortho-projected on plane $\Pi_V$. During the scanning operation, an ortho-image of the inspected object wall is generated on said plane $\Pi_V$.

From Figure 7, the Cartesian coordinates of all points of the concerned object surface and of their ortho-normal projection (ortho-image) on plane $\Pi_V$ identified by its optimum distance w from pivot point M can be obtained. Furthermore, their distances from plane $\Pi_V$ are obtained: these coordinates are uniquely connected to the polar triad r, $\theta$, $\phi$, as well as to parameter w, according to the following equations:

$$d = r \cdot \cos \phi \cdot [\, \frac{w}{k} \cos \theta + \sqrt{1 - (\tfrac{w}{k})^2} \cdot \sin \theta \,] - w ;$$

$$X_P = X_{P'} = \sqrt{k^2 - w^2} + \sqrt{(r \cos \phi)^2 - (w + d)^2} ;$$

$$Y_P = Y_{P'} = r \cdot \sin \phi ;$$

$$Z_P = - d ;$$

$$Z_{P'} = 0$$

By these transformations, the scene is referred to the triad of Cartesian orthogonal axes X, Y, Z which is utilised for referencing the whole laboratory and consequently the so obtained image is independent ( with exception of the occluded regions) from the location position of the radar on the floor. To reach this result, reflector C, however, is always left at the same location even if the laser is displaced.

Each point of the ortho-image referred to plane $\Pi_V$ has the following information:

1) the coordinates of element P' of the ortho-image $X_{P'}$ and $Y_{P'}$ in the Cartesian plane X,Y;
2) the distance d of point P of the object from the pre-selected plane for the ortho-image;
3) the reflectivity value of the pixel under inspection;
4) the three values relating to colours R, G, B defining the effective colour of the pixel;

5) plane $\Pi_V$ can be rotated about axis Y in order to optimise the ortho-image of some details of the scene , thereby realising a number of ortho-normal views starting from a single acquisition of the scene;

6) the so obtained ortho-image is not affected with coma and sphericity and chromatism aberrations over the whole visual field.

The most relevant component of the optical quality of the images of this radar is probably based upon the last mentioned feature; the image quality achievable by means of this radar cannot be achieved by means of the conventional pick up devices.

The use of unimodal beam optical fibres in fact enables focussing (and consequently a size of the resolved pixel) at the diffraction boundaries for the employed wave length; but, the complete absence of sphericity and coma aberrations is even higher and this is due to the fact that the image is scanned coaxially to the reception direction by means of a mirror unit having a fixed pivot point M. Each pixel of the scene is scanned on the axis of the monostatic transceiver system and therefore the images are resolved at the **diffraction-limited conditions** over the whole pre-selected angular scanning field, however large it may be.

By referring to Figure 8, the colour radar is designed as an integrated system utilising three coherent laser sources. The laser sources emit beams modulated by two radio frequencies by means of three independent unimodal optic fibres that merge into a single launching ferrule 210 whose surface is placed on the object plane of an achromatic doublet 700. As above said, the achromatic doublet transmits the three optical fields to the target by means of an automatic focussing device and a mirror scanning unit.

The back scattered radiation is collected on the surface of a large aperture receiver device which performs the chromatic separation of the three optical fields and focusses the R, G and B components in three multi-modal optic fibres contained in a ferrule 220 whose surface is placed upon a suitable image plane of the receiver.

The diameter of the fibres and the stationary position of ferrule 220 of the receiver are selected in such a way as to guarantee a good signal collection efficiency over the whole operative measurement range. The three optical channels are then detected and processed by an electronic section that provides for a three-dimensional reconstruction of the colour image by measuring the phases of the generated photo-currents and by mixing the three colour channels. Each image element therefore is characterised by three spatial coordinates, by an intensity value and by a colour in additive synthesis; the corresponding colour depth in the image will be inversely proportional to the scanning time and it shall contain sufficient information for a colourimetric analysis of the investigated subject in diagnostic operations on painted surfaces.

The choice of the receiver optics is based upon the consideration that the receiver (without autofocus) accepts the signal in a plain ferrule 220 with three multi-modal fibres having a core diameter of 1 mm arranged side by side and in contact with one another (pitch or interaxial distance, D = 1 mm). The choice of the core diameter D of each receiving fibre is determined by the need that a signal of sufficient amplitude be collected even in relatively non-optimum focussing conditions.

This being the construction, transmission ferrule 210 has its (conjugated) launching points on the surface of the ferrule itself separated by a distance d that, according to the equations relating to the conjugated planes, amounts to:

$$d = D\, F_D\, /\, F_R$$

wherein $F_D$ and $F_R$ are the focal length of the transmitter and of the receiver. In view of the above, d is independent on the distance of the target, while the concerned receiver is a Large Aperture Multispeckle Receiver (LAMR) with 50 mm aperture and $F_R$ = 150 mm.

The choice of the transmitter optics should keep the chromatic and spherical aberrations into account; in fact, in operations on three channels, when chromatic aberrations are present, the image planes  are distinct and placed at different distances, which is in contrast with the autofocus efficiency. The lateral resolutions at the diffraction boundaries furthermore require a total elimination of the sphericity aberrations on all of the channels and this further requirement restricts the choice range of the above said achromatic doublet among the best available lenses.

Melles Griot manufactures at least three doublets fulfilling these conditions; the doublet that was chosen in the above described project based upon the above set forth considerations is mod. LAL011 with $F_D$ = 40,00 mm and diameter A = 15,00 mm, provided with an output diaphragm of 10 mm aperture. When these choices are adopted, it is possible to drive the autofocus by the signal generated by only channel G.

The image resolution of a colour image device expresses the detail level perceptible and measurable over the whole visual field of the device itself.

If the concerned device is a photographic camera or a telecamera, the resolution that can be obtained is the result of a compromise between the value it has at the edge regions and the one it has at the central region of the image.

The sphericity aberration of an optical system is due to the different distance the rays propagating near the axis reach when they hit the image plane with respect to the distance run by the edge rays. This means that the image of a point on the object plane forms a disc on the image plane.

The chromatic aberration is due to the fact that the refraction index of the component glasses of the lens is a function of the wavelength of the optical field, so that the image planes corresponding to colours RGB fall at different levels along the optical axis and, therefore, the three fields focussed on the image plane of the lens will have different dimensions and the image will exhibit the details surrounded by coloured halos.

However accurate the sphericity and chromatism correction may be, the best values that can be obtained (generally on the optical axis of the device) are far away from the values that could be obtained by optimising the performances on the axis and neglecting the values at the edges.

Further existing aberration forms are generally of minor relevance.

The quality of an image additionally depends on the quality of the medium arranged on the image plane of the lens for recording the image. In conventional devices, the most frequently utilised mediums are of analogue type (photographic B&W or colour emulsions) and digital type (CCD and CMOS).

Both the photographic emulsions and the digital detectors have been noticeably improved in recent years, particularly the CCD and CMOS: such improvements were unexpected some years ago and have been made possible by the high pressure connected with the commercial success in the field of the digital photography.

A comparison will be hereinbelow illustrated between the resolutions achievable by analogue devices, by modern digital devices and by colour radars, whose performances will be inferred from computations and measurements related to channel G.

Resolvance of a photographic emulsion: it is expressed as number of lines per millimetre and namely the number of black lines on a white background (or of line pairs per mm) that can be distinguished per mm with a predetermined contrast. Two sights are generally utilised: a high contrast sight (1:1000) and a low contrast sight (1:1,6), that entail of course different resolvance values.

The Modulation Transfer Function (MFT) represents the method for measuring in sufficiently quantitative manner the capability of a lens or of a medium such as a photographic emulsion to furnish a specific detail level of an image corresponding to a determined contrast value. In order to express the visual perception of the details of an image, the concept of the "Cascaded Modulation Transfer " (CMT) acutance is introduced which takes the FMTs of the film, of the utilised optics as well as of the perception of the human eye into account.

The image quality in a colour radar apparatus is very high and this is due to the following reasons.

1)- The utilisation of coherent laser sources allows a lateral resolution that is not possible with non-coherent laser sources, because the laser beams are focussed according to the propagation laws of the Gaussian beams. The **diffraction-limited conditions** of coherent beams cannot be reached by any other source regardless of the optical quality of the lenses employed therein.

2)- The scanning system is based upon reflection of the transmitted beam on the pivot point of a rotating mirror, which also performs the function of a reflector for the beam back scattered to the receiver. This means that the scene is scanned on the optical axis of the monostatic radar and therefore the image has axial resolution on the whole visual field of the radar. This result cannot be obtained in any lens of conventional photography (or of capture of images or "imaging"), where a compromise between edge regions and central region of the image is always necessary.

3)- the utilisation of monochromatic sources enables eliminating the chromatic aberrations in the individual images R, G, B.

In theory, the colour topological radar appears to be the best presently existing device for imaging on static scenes.

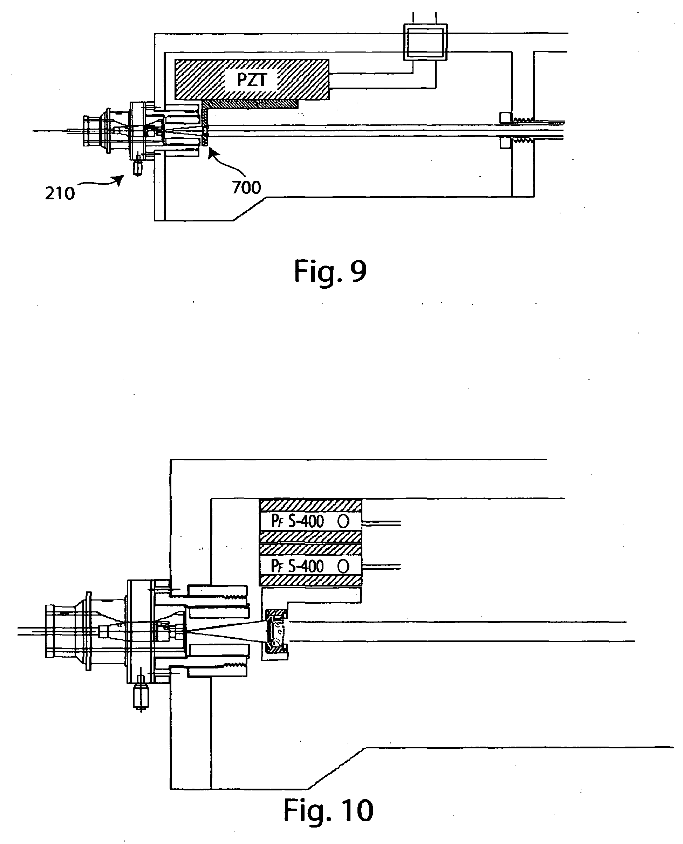

By referring now to Figure 9, namely to autofocus, the voltage signal picked-up from the distance channel controls a piezoelectric system on which a transmitter aspherical lens is mounted. The beam directed to the target is focussed on the latter in continuous manner regardless of its distance. Autofocus is conversely realised in Figure 10 by means of two piezoelectric actuators: this arrangement is employed in applications in closed rooms with strictly spaced target (autofocus is particularly critic at short distances).

Since the beam is unimodal, the maximum focussing effect is obtained as allowed by the optical assembly for the utilised wave length **(diffraction-limited conditions).**

The coherent fibres operating at 550 nm have a core diameter generally in the range of 3,5 and 4,5 micron and a NA value of about 0,13 and 0,16. As far as the computation assembly hereinbefore discussed, it was decided to adopt for the radar transmitter the 3M fibre FS-SC-4314 having a "mode field diameter" amounting to 4,3 micron and NA = 0,16. It has been utilised for channels R, G and B.

When the distances between the object plane (face of the fibre) and the image plane (target object) from the main plane of the transmission lens are designated as d' and R, then

$$D' = F_D R / (R - F_D).$$

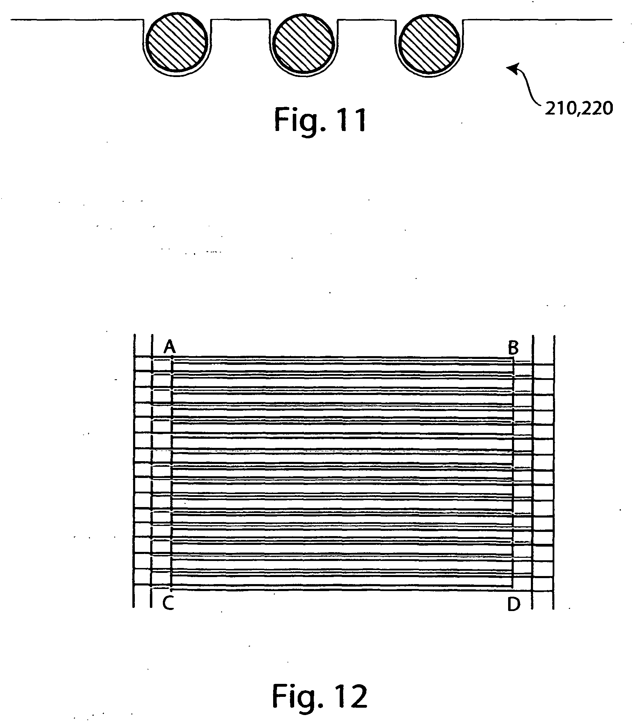

By referring to Figure 11, it can be observed that a ferrule is a device that provides for arranging the cores of the optical fibres at a very short distance, in such a way that the transmitted or received laser beams can be considered with good approximation as coincident with the unique optical axis of the device according to the invention.

The operation range for the described colour radar is of 2 m to 30 m with Gaussian propagation of the beams at the diffraction-limited conditions. This range makes it possible to utilise the radar for most of the metrology applications in fields of archaeological interest on scenarios of middle - large dimensions. Within this range, the collection efficiency is very good and it is effectivelylimited by the fibre and connector insertion losses. The utilisation of three distinct optical channels materially separated from the sources to the detectors for each employed wave length allows an almost perfect chromatic separation without crosstalk effects among the colours, while, for distances falling outside of this range, the optical "layout" is still valid.

At the **limits** of the optimum range, the signal collection efficiency falls to 30% and a chromatic crosstalk effect appears as a result of the enlargement of the beam on the (stationary) image plane of the receiver with consequent enlargement of the focus of the coloured beams also to the adjacent fibres.

It is remarked at this point that the best way to perform a scanning step is to align the planes containing the fibres of the transmitter and receiver ferrules to the azimuth scanning plane. By this approach, a successive transition of the R, G and B beams on each individual line is obtained before passing to the subsequent line. A mask is to be used on the transmitter such that it intercepts the first two beams before the third beam appears on the scene; Figure 12 shows this effect of the mask on the scanned object: the scanning frame or "raster" on the scanned object is ABCD; in fact, the mask shields the beams on the left hand of side AC and on the right hand of side BD.

In absence of a mask at the output of the scanning unit, on the image plane of the autofocussing transmitter, each beam generates a frame and the frames are horizontally spaced as an effect of the aligned arrangement of the fibres in the ferrule of the transmitter.

By designating the enlargement of the system to distance R as M = R/F, as it has always been done, then the distance between the illuminated points ("spots") on the target is d' = d.M (where d' designates the pitch of the fibres in the ferrule).

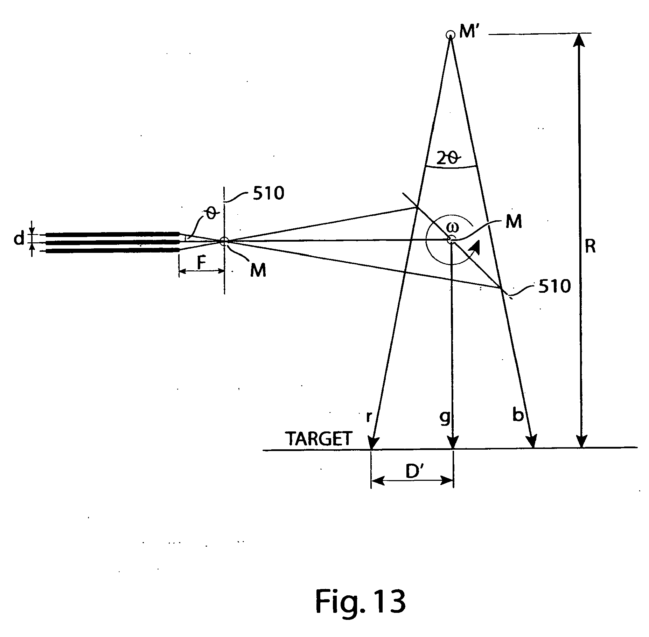

By referring to Figure 13 and taking beam G of the Figure as a reference, it can be seen that beam B is advanced and beam R is delayed by an amount corresponding to the running time $\Delta t$ for path d', which is a function of the target distance.

By introducing the angular velocity $\omega$ of the scanning mirror, the value for the running time for path d' can be obtained as $\Delta t = \theta /(2\omega)$ or even $\Delta t = d' / (2R\omega)$, wherefrom

$$\Delta t = K / \omega,$$

and

$$d' = 2 K R,$$

where K = d / (2F9 is a constant depending on the instrument utilised.

When $\gamma$ designates the azimuth aperture angle of the scan, fraction $\theta / \gamma$ represents the raster percentage that is not completely covered by the three beams and consequently is not expressed in trichromy, so that it should be masked in the launching step in order that the scanning raster ABCD as shown in Figure 3 be projected on the target.

Since $\theta = d/F = 2K$ and the designed scanning aperture $\gamma$ is 40°, it can be estimated from the numeric data (d = 270 micron, F = 40,00 mm, K = 3,375.10$^{-3}$, $\theta$ = 6,75.10$^{-3}$ rad) that the frame proportion intercepted by the mask amounts to 6,75.10$^{-3}$ 180 / (pi.40) = 9,67.10$^{-3}$ < 1 % on each side.

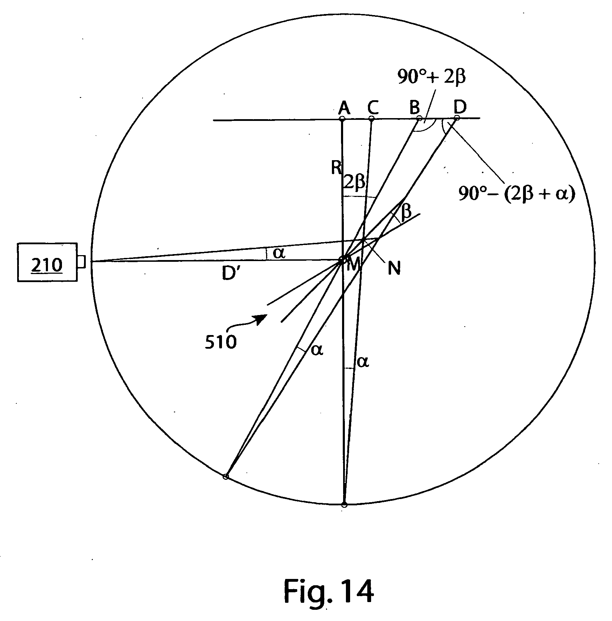

Figure 14 shows the optical arrangement or "layout" of a scan carried out on a plane perpendicular to beam R with the three beams RGB being placed on the scanning plane. As a consequence of the divergence of the three beams occurring when the scanning angle varies, the aspect ratio ("Pixel Aspect Ratio") of the involved frame varies as well and the so obtained layers should be re-normalised for strict alignment to the reconstructed image.

Let us designate the spatial separation angle of the three beams as $\alpha$ and the current angle the mirror forms with respect to the reference position (45°) as $\beta$.

The corresponding scanning angle β formed by central beam R describes a line segment from point A to point B, while the corresponding line segment described by beam G extends from point C to point D. strict alignment of the images requires therefore that the lengths of segments AB and CD be equalised and then followed by a translation of point C to point A.

Let us calculate now the dependence of the frame format on angles β and α in order to express such a "Pixel Aspect Ratio" as to enable an automatic image reconstruction.

It can be derived from the Figure that, when θ = 2 β and θ >> α:

$$PAR = CD / AB = 1 - (R + D') \alpha \ / (R \tan \theta) + (D' + R / \cos \theta) \ \alpha / ( R \sin \theta )$$

namely

$$PAR \ 1 + \alpha \ [ \tan \theta + D' ( 1 - \cos \theta ) / ( R \sin \theta )]$$

which, when R >> D', simplifies as

$$PAR = 1 + \alpha \tan \theta$$

(independent on the distance)

For the above said radar ITR50, α = 6,75 mrad and 0 ≤ θ ≤ 20°.

In typical operation conditions of environments having dimensions of a few metres, the scanning aperture is of 40° x 180°; in these conditions, the R G B images obtained have a PAR independent on the scanning distance and assuming the following values:

PAR = 1 for the central beam R and
PAR = 1,0025 for adjacent channels G and R.

It can be concluded that no PAR correction is needed for the above said model ITRC50 for the layers, while their alignment requires only the translation of the layers G and B upon R amounting to :

$$d' = ( R + D' ) \alpha$$

namely a rotation by an angle -α on the azimuth plane.

The alignment at these numeric values requires motors and encoders having very high angular resolutions.

By adopting the launching mask, each pixel starting from the first one is scanned by the three beams in successive times, but the same field is scanned by the concerned three beams and, therefore, the R G and B images obtained from the three channels can be recombined offline by means of a dedicated program (for instance Photoshop CS2).

It is to be noted that the device according to this invention wholly overcomes all the difficulties connected with the state of the art techniques for production of 3D imaged coloured by overlapping 2D layers containing colour data (for instance, digital ortho-photographs) to the point cloud furnished by commercially available time-of-flight based rangefinders.

In general, the strict limitations characterising all of the techniques entailing the correction of the image distortions (ortho-corrections or differential rectifications of the concerned digitised photograms by means of a dedicated software) are more accurately overcome, such corrections being always performed before all operations of ortho-normalisation and superposition of plane images and images obtained by means of optical devices furnishing distance data.

The colour radar according to this invention in effect scans each element of the scene by means of three coherent laser beams operating in monostatic manner at different wave lengths (R, G, B beams) and furnishes for each of them the reflectivity, the lateral resolution (that can be calculated from the size of the laser spot), the level of each individual pixel as well as its depth.

This "native" association of the colour to each pixel makes it possible to carefully investigate the colour shade on the surface and to measure the quality degradation of the surface colour of the examined objects, as caused by the actions of the environmental agents. This property is aimed at furnishing a very important impetus in the fields of maintenance and restoration of paintings and architectonic constructions as well as at making the obtained results available to those skilled in the art.

The R, G and B beams in the proposed device are independent and their strength can be **proportioned** so that the image "hue" is optimised and made as much as possible equal to the hue of the investigated scene; the colour depth in effect can be driven to high values (for instance 16 bits per channel) with acceptable pick up times for static shot at the diffraction boundaries.

The image resolution of this topological colour radar is driven to the diffraction boundaries of the unimodal R, G, B beams in order that each resolved element of the image is provided with the information relating to its spatial co-ordinates and with the numerical triads that define the colour of its channels.

The main innovation concerning the resolution, namely the detail of the particulars of the observed scene is a dense surface (no not-occluded point of the scene is not scanned). This is a severe difference distinguishing the topological radar over the presently commercially available devices that generate clouds of points.

The described and proposed device therefore consist in a monostatic radar provided with an automatic focussing system, designed for generation of colour three-dimensional images of solid surfaces and with very advanced definitions (for instance 1 millimetre at a distance of 10 m for each pixel of the scene).

In this description, applications are proposed for picking up images and for colour metrology in the following fields:

1) inspection, measurement and creation of databases for forming image collections intended for use by students and aimed at supporting restoration of cultural items;
2) establishment of virtual museums (creation of high definition, three-dimensional images amenable to be scanned) as well as real museums (by fast and even remote prototyping of the available finds;
3) three-dimensional map of buildings and constructions of archaeological interest georeferenced for civil use and for creation of a georeferenced register of the national cultural goods.

In the industrial and manufacturing field, the possible applications include the fields in which calorimetry has a not negligeable relevance in the production processes; the presently suggested fields are as follows:

4) the manufacturing industry for goods based upon coloured leather, such as the shoe industry and the living-room furniture industry wherein the constancy of the colour hue on large surfaces is a fundamental requirement from the product quality view point and consequently requires a chromatic inspection by means of devices adapted to identify and classify a colour according to a very high number of chromatic levels (for instance by use of RGB beams with colour depth of 16 bits);
5) the production of high quality paints is in turn connected to the possibility to reproduce paints having the same chromatic hue as pre-existing paints of the same colour (for instance aimed at re-painting a wall or like).

**Claims**

1. A monostatic laser radar device for metrology and three-dimensional colour vision of target objects, comprising:

   - an optical system with:

     - three current-driven laser diodes, which provide corresponding three modulated unimodal light beams having respective wavelengths corresponding to the three primary colours of the additive synthesis;
     - a transmitter (210, 270, 700, 400, 610, 550) for said three modulated unimodal light beams, which, by means of an achromatic doublet (700) and a scanning unit (550), focuses said three modulated unimodal light beams upon the target object to be probed, located at a distance $d_B$ from a pivot point (M) of the scanning unit (550);
     - an incoherent receiver (550, 610, 620, 200, 220, 260) which receives the radiation back scattered from the target object and focusses the received signals, which are selectively received by means of an optical band separator, according to the wavelength upon three receiving multimodal fibres that forward them to suitable three respective photo-detectors;

     - an electronic apparatus that processes the electrical signals provided by the photo-detectors in order to recover therefrom the information relating to the three colour reflectivity of the pixels of the target object and their distance from the pivot point (M), the signal received at each wavelength being independently processed by said electronic apparatus and the resulting processed signals being subsequently electronically combined by the same in order to obtain a colour image,
the device being cherecterised in that:

- said three modulated unimodal light beams are conveyed from the three current-driven diodes by three independent launching unimodal optical fibres (270) and launched from corresponding launching points of said three launching unimodal optical fibres at a launching ferrule (210), which is located upon the object plane of the achromatic doublet (700);
- said scanning unit is so arranged that one of the three modulated unimodal light beams launched is reflected onto the pivot point (M) which is the pivot point (M) of a rotating mirror (510) able to carry out two perpendicular rotations by means of two motors (520,530), one of the two rotation axes of rotating mirror (510) coinciding with the direction of said one of the three transmitted beams;
- the rotating mirror (510) is arranged to act also as a reflector of the beam back scattered towards the receiver (550, 610, 620, 200, 260), said rotating mirror (510) being rotatable for at least a portion of a straight angle, the incoherent receiver (550, 610, 620, 200, 260) thus receiving the radiation back scattered from the target through the same scanning unit (550) of the transmitter;
- the incoherent receiver comprises means (200) for focussing the selectively received signals according to the wavelength upon three receiving points of three multimodal receiving optical fibres at a receiving ferrule (220), the focused received signals being then forwarded through optical fibres to said suitable three photo-detectors;

the three launching points from said three launching fibres and the three receiving points upon said corresponding three receiving fibres being located on conjugated optical planes, the transmitter and the receiver having a common optical axis, the relationship between the interaxial distance $d$ of the launching fibres and the interaxial distance $D$ of the receiving fibres being expressed by $d = D\, F_D/F_R$, wherein $F_D$ represents the focal length of the transmitter and $F_R$ represents the focal length of the receiver.

2. A device according to claim 1, **characterised in that** said light output passes through an apertured mirror (610) arranged at 45° and hits the pivot point of a powered planar mirror (510), arranged within the scanning unit (550), rotatably mounted about the monostatic axis of the radar, the powered planar mirror (510) relaying the light output to the target object.

3. A device according to claim 1 or 2, **characterised in that** a combiner for RGB beams is used to generate a white beam that is then launched upon the target object, an optical band separator being used in the receiver (550, 610, 620, 200, 260) in order to obtain the individual beams R, G, B to be sent to the three photo-detectors to be individually detected, the optical band separator utilising narrow band dichroic filters and/or mirrors or like.

4. A device according to any one of claims 1 to 3, **characterised in that** each signal related to a colour is demodulated upon two distinct electronic channels for strength and phase and wherein a third electronic channel is provided for obtaining a three-dimensional image related to a colour, for each colour channel, and the merge of the data related to the three colours.

5. A device according to any one claim 1 to 4, **characterised in that** the whole rotating mirror (510) is rotated for at least a portion of a round angle about the axis coinciding with the transmission direction of the beam reflected on the pivot point of the scanning unit.

6. A device according to any one of claims 1 to 5, **characterised in that** the terminal portions of said three launching optical fibres and the initial portions of said three receiving optical fibres are arranged within static housings designed as launching ferrule (210) and receiving ferrule (220), respectively, whose planes facing to the receiver (550, 610, 620, 200, 260) and to the transmitter (210, 700, 400, 610, 550) are optically conjugated planes, and **in that**:

   - the launching ferrule (210) comprising a substrate having three grooves wherein the three coherent input fibres are at least partially fastened, said fibres being parallel arranged on a common plane and spaced apart by an interaxial distance d,
   - the receiving ferrule (220) comprising a substrate having three grooves wherein the three coherent input fibres are at least partially fastened, said fibres being parallel arranged on a common plane and spaced apart by an interaxial distance D.

7. A device according to claim 6, **characterised in that** the three launching unimodal optical fibres merge together into the launching ferrule (210), whose surface facing to the transmitter (210, 700, 400, 610, 550) optics is located upon the object plane of said achromatic doublet.

**8.** A device according to claim 6 or 7, **characterised in that** the surface of the receiving ferrule (220) facing to the receiver optics is located upon a suitable image plane of the receiver (550, 610, 620, 200, 260).

**9.** A device according to any one of claims 1 to 8, **characterised in that** the transmitter (210, 700, 400, 610, 550) optics is positioned at a fixed distance from the surface of the launching ferrule (210), so as to obtain a fixed focus focussing.

**10.** A device according to any one of claims 1 to 8, **characterised in that** the transmitter (210, 700, 400, 610, 550) is auto-focussing, the auto-focussing being obtained, by picking-up the voltage signal from the distance channel and letting it control a piezoelectric system (400) upon which the transmitting aspherical lens is mounted.

**11.** A device according to any one of claims 1 to 10, **characterised in that** the three scanning beams are amplitude modulated on at least two radio frequencies, in particular at 200 MHz and 10 MHz with a modulation index near to one, the necessary resolution to determine with low resolution but univocally the distance of the objects that are present on the scene corresponding to the minimum frequency component, while higher and higher resolution values corresponding to higher and higher frequency components.

**12.** A device according to any one of claims 1 to 11, **characterised in that** three interference filters (230, 240, 250) are provided before the photodetectors in order to shield the individual channels from the radiation that is spectrally outside the optical band of the channel.

**13.** A device according to any one of claims 1 to 12, **characterised in that** the target is scanned, instead of using said rotating mirror (510), by means of a mirror or a prism pair and the scanning rate can be adjusted particularly between 10 and 10000 microseconds per pixel with variable sight fields from 0° to 360° in elevation and azimuth.

**14.** A scanning and detection method for metrology and three-dimensional vision, **characterised in that** it comprises the following steps:

A. directing three trichromatic scanning laser beams to the scene to be scanned through a single scanning optical apparatus , said laser beams being directed with substantially negligible interaxial distance;
B. receiving the laser beams back-reflected from objects existing on said scene through a single scanning optical apparatus;
C. detecting the three laser beams;
D. extracting the phase and intensity information from the laser beams detected in step C, in order to get the reflectivity for each RGB channel and the distance of the target
E. combining said reflectivity for each channel and said distance to obtain a three-dimensional colour image;

by utilising a device according to any one of claims 1 to 13, the planes containing the fibres of the ferrules of the transmitter and of the receiver being aligned with the azimuthal scanning plane.

**15.** A method according to claim 14, **characterised in that** a mask is utilised on the transmitter for intercepting the first two laser beams until the third laser beam appears on the scene, the interception involving a fraction of the scanning frame amounting to $\theta/\gamma$, wherein $\gamma$ means the scanning azimuthal aperture and $\theta$ means the angular aperture between the laser beams.

**16.** Use of the device according to any one of claims 1 to 13 as a colorimeter.


**Patentansprüche**

**1.** Eine monostatische Laser-Radar-Vorrichtung für die Messtechnik und das dreidimensionale Farb-Sehen von Zielobjekten, umfassend:

- ein optisches System mit:

- drei strom-betriebenen Laserdioden, die korrespondierende drei modulierte unimodale Lichtstrahlen bereitstellen, die entsprechende Wellenlängen haben, korrespondierend zu den drei Primärfarben der additiven Synthese;

- einem Sender (210, 270, 700, 400, 610, 550) für die drei modulierten unimodalen Lichtstrahlen, der mittels eines achromatischen Dubletts (700) und einer Abtasteinheit (550) die drei modulierten unimodalen Lichtstrahlen auf das zu untersuchende Zielobjekt fokussiert, das in einer Entfernung $d_B$ von einem Drehpunkt (M) der Abtasteinheit (550) angeordnet ist;

- einem inkohärenten Empfänger (550, 610, 620, 200, 220, 260), der die von dem Zielobjekt rückgestreute Strahlung empfängt und die empfangenen Signale, die mittels einer optische Band-Trennvorrichtung selektiv empfangen werden, gemäß der Wellenlänge auf drei empfangende multimodale Fasern fokussiert, die diese zu geeigneten drei entsprechenden Photodetektoren weiterleiten;

- eine elektronische Vorrichtung, die die elektrischen Signale, die von den Photodetektoren bereitgestellt werden, verarbeitet, um daraus die Information betreffend die Drei-Farben-Reflektivität der Pixel des Zielobjektes und ihren Abstand von dem Drehpunkt (M) zurückzugewinnen, wobei das auf jeder Wellenlänge empfangene Signal durch die elektronische Vorrichtung in unabhängiger Weise verarbeitet wird und die resultierenden verarbeiteten Signale nachfolgend elektronisch durch selbige kombiniert werden, um ein Farbbild zu erhalten, wobei Vorrichtung ist **dadurch gekennzeichnet ist, dass**:

- die drei modulierten unimodalen Lichtstrahlen von den drei strom-betriebenen Dioden durch drei unabhängige ausstoßende unimodale optische Fasern (270) übertragen werden und von korrespondierenden Ausstoßpunkten der drei ausstoßenden unimodalen optischen Fasern an einer Ausstoßhülse (210) ausgestoßen werden, die auf der Objektebene des achromatischen Dubletts (700) angeordnet ist;

- die Abtasteinheit so angeordnet ist, dass einer der drei austretenden modulierten unimodalen Lichtstrahlen auf den Drehpunkt (M) reflektiert wird, der der Drehpunkt (M) eines Rotationsspiegels (510) ist, der in der Lage ist, zwei senkrechte Rotationen mittels zweier Motoren (520, 530) durchzuführen, wobei eine der zwei Rotationsachsen des Rotationsspiegels (510) mit der Richtung des einen der drei übermittelten Strahlen zusammenfällt;

- der Rotationsspiegel (510) angeordnet ist, um auch als ein Reflektor des in Richtung des Empfängers (550, 610, 620, 200, 260) zurückgestreuten Strahles zu dienen, wobei der Rotationsspiegel (510) für zumindest einen Teil eines gestreckten Winkels rotierbar ist, der inkohärente Empfänger (550, 610, 620, 200, 260) dadurch die von dem Ziel rückgestreute Strahlung durch die gleiche Abtasteinheit (550) des Senders empfängt;

- der inkohärente Empfänger Mittel (200) zur Fokussierung der selektiv empfangenen Signale gemäß der Wellenlänge auf drei Empfangspunkte von drei multimodalen aufnehmenden optischen Fasern an einer empfangenden Hülse (220) enthält, wobei die fokussierten empfangenen Signale dann durch die optischen Fasern zu den geeigneten drei Photodetektoren weitergeleitet werden; wobei

die drei Ausstoßpunkte von den drei Ausstoßfasern und die drei Empfangspunkte auf den korrespondierenden drei Empfangsfasern auf konjugierten optischen Ebenen angeordnet sind, der Sender und der Empfänger eine gemeinsame optische Achse haben, die Beziehung zwischen dem interaxialen Abstand d der Ausstoßfasern und dem interaxialen Abstand $D$ der Empfangsfasern durch $d = D\, F_D/F_R$ ausgedrückt ist, wobei $F_D$ die Brennweite des Senders und $F_R$ die Brennweite des Empfängers darstellt.

2. Eine Vorrichtung nach Anspruch 1, **dadurch gekennzeichnet, dass** der Lichtausstoß durch einen bei 45° angeordneten, mit Öffnungen versehenen Spiegel (610) verläuft und den Drehpunkt eines angetriebenen planaren Spiegels (510) trifft, der innerhalb der Abtasteinheit (550) angeordnet ist und um die monostatische Achse des Radars drehbar montiert ist, wobei der angetriebene planare Spiegel (510) den Lichtausstoß zu dem Zielobjekt weiterleitet.

3. Eine Vorrichtung nach Anspruch 1 oder 2, **dadurch gekennzeichnet, dass** ein Kombinierer für RGB-Strahlen verwendet wird, um einen weißen Strahl zu erzeugen, der dann auf das Zielobjekt ausgestoßen wird, eine optische Band-Trennvorrichtung in dem Empfänger (550, 610, 620, 200, 260) verwendet wird, um die einzelnen Strahlen R, G, B zu erhalten, um diese zu den drei Photodetektoren zu senden, um einzeln detektiert zu werden, die optische Band-Trennvorrichtung schmalbandige dichroitische Filter und/oder Spiegel oder dergleichen verwendet.

4. Eine Vorrichtung nach einem der vorhergehenden Ansprüche 1 bis 3, **dadurch gekennzeichnet, dass** jedes zu einer Farbe zugehörige Signal auf zwei verschiedenen elektronischen Kanälen nach Stärke und Phase demoduliert wird und wobei ein dritter elektronischer Kanal vorgesehen ist, um ein dreidimensionales Bild bezüglich einer Farbe, für jeden Farbkanal, und die Zusammenführung der zu den drei Farben gehörigen Daten zu erhalten.

5. Eine Vorrichtung nach einem der vorhergehenden Ansprüche 1 bis 4, **dadurch gekennzeichnet, dass** der gesamte Rotationsspiegel (510) für zumindest einen Teil eines Vollwinkels um die Achse, die mit der Übertragungsrichtung des auf den Drehpunkt der Abtasteinheit reflektierten Strahls zusammenfällt, rotiert wird.

**6.** Eine Vorrichtung nach einem der vorhergehenden Ansprüche 1 bis 5, **dadurch gekennzeichnet, dass** die Endbereiche der drei ausstoßenden optischen Fasern und die Anfangsbereiche der drei empfangenden optischen Fasern innerhalb statischer Gehäuse angeordnet sind, die jeweils als Ausstoßhülse (210) und Empfangshülse (220) entworfen sind, deren dem Empfänger (550, 610, 620, 200, 260) und dem Sender (210, 700, 400, 610, 550) zugewandten Ebenen optisch konjugierte Ebenen sind, und dass:

- die Ausstoßhülse (210) ein Substrat mit drei Nuten umfasst, worin die drei kohärenten Eingangsfasern zumindest teilweise befestigt sind, wobei diese Fasern auf einer gemeinsamen Ebene parallel angeordnet und voneinander durch einen interaxialen Abstand d beabstandet sind,
- die Empfangshülse (220) ein Substrat mit drei Nuten umfasst, worin die drei kohärenten Eingangsfasern zumindest teilweise befestigt sind, wobei die Fasern auf einer gemeinsamen Ebene parallel angeordnet und voneinander durch einen interaxialen Abstand D beabstandet sind.

**7.** Eine Vorrichtung nach Anspruch 6, **dadurch gekennzeichnet, dass** die drei ausstoßenden unimodalen optischen Fasern in die Ausstoßhülse (210) hinein zusammengeführt werden, deren der Transmitter (210, 700, 400, 610, 500)-Optik zugewandte Oberfläche auf der Objektebene des achromatischen Dubletts angeordnet ist.

**8.** Eine Vorrichtung nach den Ansprüchen 6 oder 7, **dadurch gekennzeichnet, dass** die der Empfängeroptik zugewandte Oberfläche der Empfangshülse (220) auf einer geeigneten Bildebene des Empfängers (550, 610, 620, 200, 260) angeordnet ist.

**9.** Eine Vorrichtung nach einem der vorhergehenden Ansprüche 1 bis 8, **dadurch gekennzeichnet, dass** die Sender (210, 700, 400, 610, 550)-Optik an einem festen Abstand von der Oberfläche der Ausstoßhülse (210) positioniert ist, um eine Fixfokus-Fokussierung zu erhalten.

**10.** Eine Vorrichtung nach einem der vorhergehenden Ansprüche 1 bis 8, **dadurch gekennzeichnet, dass** der Sender (210, 700, 400, 610, 550) autofokussierend ist, wobei das Autofokussieren erreicht wird durch Aufgreifen des Spannungssignals von dem Abstandskanal und dieses ein piezoelektrisches System (400), auf dem die übertragende asphärische Linse montiert ist, steuern zu lassen.

**11.** Eine Vorrichtung nach einem der vorhergehenden Ansprüche 1 bis 10, **dadurch gekennzeichnet, dass** die drei Abtaststrahlen auf zumindest zwei Radiofrequenzen amplitudenmoduliert sind, insbesondere bei 200 MHz und 10 MHz mit einem Modulationsindex nahe zu 1, und dass die notwendige Auflösung, um mit niedriger Auflösung, aber in eindeutiger Weise, den Abstand der Objekte, die auf der Szene vorhanden sind, zu bestimmen, der minimalen Frequenzkomponente entspricht, während höher und höhere Auflösungswerte höher und höheren Frequenzkomponenten entsprechen.

**12.** Eine Vorrichtung nach einem der vorhergehenden Ansprüche 1 bis 11, **dadurch gekennzeichnet, dass** drei Interferenzfilter (230, 240, 250) vor den Photodetektoren vorgesehen sind, um die einzelnen Kanäle von der Strahlung, die spektral außerhalb des optischen Bandes des Kanals liegt, abzuschirmen.

**13.** Eine Vorrichtung nach einem der vorhergehenden Ansprüche 1 bis 12, **dadurch gekennzeichnet, dass** das Ziel, statt unter Verwendung des Rotationsspiegels (510), mittels eines Spiegels oder eines Prismenpaares abgetastet wird, und dass die Abtastrate insbesondere zwischen 10 und 10000 Mikrosekunden pro Pixel mit variablen Sichtfeldern von 0° bis 360° in Elevation und Azimut angepasst werden kann.

**14.** Ein Abtast- und Detektionsverfahren für Messungen und dreidimensionales Sehen, **dadurch gekennzeichnet, dass** es die folgenden Schritte umfasst:

A. Lenken dreier trichromatischer Abtastlaserstrahlen auf die abzutastende Szene durch eine einzelne abtastende optische Vorrichtung, die Laserstrahlen sind mit im Wesentlichen vernachlässigbarem interaxialem Abstand gelenkt;
B. Empfangen der von auf der Szene vorhandenen Objekten rückreflektierten Laserstrahlen durch eine einzelne abtastende optische Vorrichtung;
C. Detektieren der drei Laserstrahlen;
D. Extrahieren der Phasen- und Intensitätsinformationen aus den im Schritt C detektierten Laserstrahlen, um das Reflektionsvermögen für jeden RGB-Kanal und den Abstand des Zieles zu erhalten;
E. Kombinieren des Reflexionsvermögens für jeden Kanal und des Abstandes, um ein dreidimensionales Farbbild zu erhalten;

durch Verwendung einer Vorrichtung gemäß einem der Ansprüche 1 bis 13, wobei die Ebenen, die die Fasern der Hülsen des Senders und des Empfängers enthalten, mit der azimutalen Abtastebene ausgerichtet sind.

15. Ein Verfahren nach Anspruch 14, **dadurch gekennzeichnet, dass** eine Maske auf dem Sender verwendet wird, um die ersten beiden Laserstrahlen zu unterbrechen, bis der dritte Laserstrahl auf der Szene erscheint, die Unterbrechung beinhaltet einen Bruchteil des Abtastrahmens in Höhe von 0/7, wobei γ die abtastende azimutale Öffnung und θ die Winkelöffnung zwischen den Laserstrahlen ist.

16. Verwendung der Vorrichtung gemäß einem der Ansprüche 1 bis 13 als ein Farbmessgerät.

**Revendications**

1. Dispositif de radar à laser monostatique pour métrologie et vision en couleurs en trois dimensions d'objets cibles, comprenant :

- un système optique avec :

- trois diodes de laser commandées en courant, qui délivrent trois faisceaux de lumière unimodaux modulés correspondants ayant des longueurs d'onde respectives correspondant aux trois couleurs primaires de la synthèse additive ;
- un transmetteur (210, 270, 700, 400, 610, 550) pour lesdits trois faisceaux de lumière unimodaux modulés, qui, à l'aide d'un doublet achromatique (700) et d'une unité de balayage (550), focalise lesdits trois faisceaux de lumière unimodaux modulés sur l'objet cible à sonder, situé à une distance $d_B$ par rapport à un point de pivot (M) de l'unité de balayage (550) ;
- un récepteur incohérent (550, 610, 620, 200, 220, 260), qui reçoit le rayonnement rétrodiffusé par l'objet cible et qui focalise les signaux reçus, qui sont reçus de façon sélective à l'aide d'un séparateur de bande optique, en fonction de la longueur d'onde, sur trois fibres multimodes de réception qui les transmettent à trois photodétecteurs respectifs appropriés ;

- un appareil électronique qui traite les signaux électriques délivrés par les photodétecteurs de façon à récupérer à partir de ceux-ci l'information concernant le facteur de réflexion des trois couleurs des pixels de l'objet cible et leur distance par rapport au point de pivot (M), le signal reçu à chaque longueur d'onde étant traité indépendamment par ledit appareil électronique et les signaux traités résultants étant ensuite électroniquement combinés par celui-ci de façon à obtenir une image en couleurs, le dispositif étant **caractérisé en ce que** :
- lesdits trois faisceaux de lumière unimodaux modulés sont convoyés à partir des trois diodes commandées en courant par trois fibres optiques unimodales de lancement indépendantes (270) et lancés à partir de points de lancement correspondants desdites trois fibres optiques unimodales de lancement au niveau d'une virole de lancement (210), qui est disposée sur le plan d'objet du doublet achromatique (700) ;
- ladite unité de balayage est agencée de telle sorte que l'un des trois faisceaux de lumière unimodaux modulés lancés soit réfléchi sur le point de pivot (M), qui est le point de pivot (M) d'un miroir tournant (510) susceptible d'effectuer deux rotations perpendiculaires à l'aide de deux moteurs (520, 530), l'un des deux axes de rotation du miroir tournant (510) coïncidant avec la direction dudit faisceau des trois faisceaux transmis ;
- le miroir tournant (510) est agencé de façon à jouer également le rôle de réflecteur du faisceau rétrodiffusé vers le récepteur (550, 610, 620, 200, 260), ledit miroir tournant (510) pouvant tourner sur au moins une partie d'un angle plat, le récepteur incohérent (550, 610, 620, 200, 260) recevant ainsi le rayonnement rétrodiffusé par la cible par l'intermédiaire de la même unité de balayage (550) du transmetteur ;
- le récepteur incohérent comprend des moyens (200) pour focaliser les signaux reçus de façon sélective en fonction de la longueur d'onde sur trois points de réception de trois fibres optiques de réception multimodes au niveau d'une virole de réception (220), les signaux reçus focalisés étant ensuite transmis par l'intermédiaire de fibres optiques auxdits trois photodétecteurs appropriés ;

les trois points de lancement à partir desdites trois fibres de lancement et les trois points de réception sur lesdites trois fibres de réception correspondantes étant situés sur des plans optiques conjugués, le transmetteur et le récepteur, ayant un axe optique commun, la relation entre la distance interaxiale d des fibres de lancement et la distance interaxiale $D$ des fibres de réception étant exprimée par $d = D\,F_D/F_R$, où $F_D$ représente la longueur focale du transmetteur et $F_R$ représentr la longueur focale du récepteur.

2. Dispositif selon la revendication 1, **caractérisé en ce que** ladite sortie de lumière traverse un miroir à ouverture (610) disposé à 45° et frappe le point de pivot d'un miroir plan motorisé (510), disposé à l'intérieur de l'unité de balayage (550), monté de façon à pouvoir tourner autour de l'axe monostatique du radar, le miroir plan motorisé (510) relayant la sortie de lumière vers l'objet cible.

3. Dispositif selon la revendication 1 ou 2, **caractérisé en ce qu'**un mélangeur pour des faisceaux RVB est utilisé pour générer un faisceau blanc qui est ensuite lancé sur l'objet cible, un séparateur de bande optique étant utilisé dans le récepteur (550, 610, 620, 200, 260) afin d'obtenir les faisceaux individuels R, V, B destinés à être envoyés aux trois photodétecteurs de façon à être détectés individuellement, le séparateur de bande optique utilisant des filtres dichroïques à bande étroite et/ou des miroirs, ou analogues.

4. Dispositif selon l'une quelconque des revendications 1 à 3, **caractérisé en ce que** chaque signal associé à une couleur est démodulé sur deux canaux électroniques distincts pour la force et pour la phase, et dans lequel un troisième canal électronique est prévu pour obtenir une image en trois dimensions associée à une couleur, pour chaque canal de couleur, et la fusion des données associées aux trois couleurs.

5. Dispositif selon l'une quelconque des revendications 1 à 4, **caractérisé en ce que** l'ensemble du miroir tournant (510) tourne sur au moins une partie d'un angle plein autour de l'axe coïncidant avec la direction de transmission du faisceau réfléchi sur le point de pivot de l'unité de balayage.

6. Dispositif selon l'une quelconque des revendications 1 à 5, **caractérisé en ce que** les parties terminales desdites trois fibres optiques de lancement et les parties initiales desdites trois fibres optiques de réception sont disposées à l'intérieur de boîtiers statiques désignés sous le nom de virole de lancement (210) et de virole de réception (220), respectivement, dont les plans faisant face au récepteur (550, 610, 620, 200, 260) et au transmetteur (210, 700, 400, 610, 550) sont des plans optiquement conjugués, et **en ce que** :

   - la virole de lancement (210) comprend un substrat comportant trois rainures dans lesquelles les trois fibres d'entrée cohérentes sont au moins partiellement fixées, lesdites fibres étant disposées en parallèle sur un plan commun et mutuellement espacées d'une distance interaxiale d ;
   - la virole de réception (220) comprend un substrat comportant trois rainures dans lesquelles les trois fibres d'entrée cohérentes sont au moins partiellement fixées, lesdites fibres étant disposées en parallèle sur un plan commun et mutuellement espacées par une distance interaxiale D.

7. Dispositif selon la revendication 6, **caractérisé en ce que** les trois fibres optiques unimodales de lancement se rejoignent mutuellement dans la virole de lancement (210), dont la surface faisant face aux optiques du transmetteur (210, 700, 400, 610, 550) est située sur le plan d'objet dudit doublet achromatique.

8. Dispositif selon la revendication 6 ou 7, **caractérisé en ce que** la surface de la virole de réception (220) faisant face aux optiques du récepteur est située sur un plan d'image approprié du récepteur (550, 610, 620, 200, 260).

9. Dispositif selon l'une quelconque des revendications 1 à 8, **caractérisé en ce que** les optiques du transmetteur (210, 700, 400, 610, 550) sont positionnées à une distance fixe par rapport à la surface de la virole de lancement (210), de façon à obtenir une focalisation à foyer fixe.

10. Dispositif selon l'une quelconque des revendications 1 à 8, **caractérisé en ce que** le transmetteur (210, 700, 400, 610, 550) est auto-focalisant, l'auto-focalisation étant obtenue par la prise du signal de tension à partir du canal à distance et par le fait de lui faire commander un système piézo-électrique (400) sur lequel est montée la lentille asphérique de transmission.

11. Dispositif selon l'une quelconque des revendications 1 à 10, **caractérisé en ce que** les trois faisceaux de balayage sont modulés en amplitude sur au moins deux fréquences radio, en particulier à 200 MHz et 10 MHz, avec un indice de modulation proche de un, la définition nécessaire pour déterminer avec une faible définition mais de façon univoque la distance des objets qui sont présents sur la scène correspondant à la composante de fréquence minimale, des valeurs de définition de plus en plus élevées correspondant à des composantes de fréquence de plus en plus élevées.

**12.** Dispositif selon l'une quelconque des revendications 1 à 11, **caractérisé en ce que** trois filtres à interférence (230, 240, 250) sont disposés avant les photodétecteurs, de façon à protéger les canaux individuels vis-à-vis du rayonnement qui se trouve spectralement à l'extérieur de la bande optique du canal.

**13.** Dispositif selon l'une quelconque des revendications 1 à 12, **caractérisé en ce que** la cible est balayée, plutôt qu'à l'aide dudit miroir tournant (510), au moyen d'un miroir ou d'une paire de prismes, et la vitesse de balayage peut être réglée en particulier entre 10 et 10000 microsecondes par pixel, avec des champs de vision variables de 0° à 360° en élévation et en azimut.

**14.** Procédé de balayage et de détection pour métrologie et vision en trois dimensions, **caractérisé en ce qu'**il comprend les étapes suivantes :

A. le fait de diriger trois faisceaux laser de balayage trichromatiques vers la scène devant être balayée par l'intermédiaire d'un appareil optique de balayage unique, lesdits faisceaux laser étant dirigés avec une distance interaxiale sensiblement négligeable ;
B. la réception des faisceaux laser rétroréfléchis par les objets existant sur ladite scène par l'intermédiaire d'un appareil optique de balayage unique ;
C. la détection des trois faisceaux de laser ;
D. l'extraction de l'information de phase et d'intensité à partir des faisceaux laser détectés dans l'étape C, de façon à obtenir le facteur de réflexion pour chaque canal RVB et la distance de la cible ;
E. la combinaison dudit facteur de réflexion pour chaque canal et de ladite distance de façon à obtenir une image en couleurs en trois dimensions ;

par l'utilisation d'un dispositif selon l'une quelconque des revendications 1 à 13, les plans contenant les fibres des viroles du transmetteur et du récepteur étant alignés avec le plan de balayage azimutal.

**15.** Procédé selon la revendication 14, **caractérisé en ce qu'**un masque est utilisé sur le transmetteur pour intercepter les deux premiers faisceaux laser jusqu'à ce que le troisième faisceau laser apparaisse sur la scène, l'interception mettant en oeuvre une fraction de la trame de balayage s'élevant à $\theta/\gamma$, $\gamma$ désignant l'ouverture azimutale de balayage et $\theta$ désignant l'ouverture angulaire entre les faisceaux de laser.

**16.** Utilisation du dispositif selon l'une quelconque des revendications 1 à 13 comme colorimètre.

**Fig. 1**

**Fig. 2**

Intensity
information

Amplitude
information

Amplifier

AM decoder

Intensity
channel

Amplifier

Mixer

Amplifier

Filter

Phase
comparator

Limiter

APD

Tuning
filter

Tuning
filter

Mixer

Amplifier

Local RF
oscillator

Audio local
oscillator

Reference signal

**Fig. 3**

**Fig. 4**

Fig. 5

Fig. 6

**Fig. 7**

**Fig. 8**

Fig. 9

Fig. 10

**Fig. 11**

210,220

**Fig. 12**

Fig. 13

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1306879
- IT RM20030588 A
- US 3945729 A
- DE 4439298